# EUROPÄISCHE PATENTSCHRIFT

(11) **EP 2 825 742 B1**
(45) Veröffentlichungstag und Bekanntmachung des Hinweises auf die Patenterteilung: **10.05.2017**
(21) Anmeldenummer: 13708405.9
(22) Anmeldetag: 07.03.2013
(51) Int. Cl.: F02B 29/04, F28F 99/00

(54) **LADELUFTKÜHLEINRICHTUNG**
CHARGE-AIR COOLING DEVICE
DISPOSITIF DE REFROIDISSEMENT DE L'AIR DE CHARGE

(30) Priorität: 15.03.2012 DE 102012204121
(43) Veröffentlichungstag der Anmeldung: 21.01.2015
(73) Patentinhaber: Mahle International GmbH, 70376 Stuttgart (DE)
(72) Erfinder: BRUGGESSER, Veit, 71157 Hildrizhausen (DE); FISCHER, Oliver, 71384 Weinstadt (DE); STEHLIG, Jürgen, 72654 Neckartenzlingen (DE)
(74) Vertreter: BRP Renaud & Partner mbB Rechtsanwälte Patentanwälte Steuerberater
(86) Internationale Anmeldenummer: PCT/EP2013/054559
(87) Internationale Veröffentlichungsnummer: WO 2013/135546

(56) Entgegenhaltungen:
- EP-A1- 0 714 797
- WO-A1-2011/023516
- DE-A1- 19 902 504
- DE-A1-102007 042 868
- FR-A1- 2 645 209
- US-A- 3 775 972

## Beschreibung

Die vorliegende Erfindung betrifft eine Ladeluftkühleinrichtung für eine Frischluftanlage einer Brennkraftmaschine, die insbesondere in einem Kraftfahrzeug angeordnet ist, gemäß dem Oberbegriff des Anspruchs 1.

Eine gattungsgemäße Ladeluftkühleinrichtung ist aus der WO 2011/023516 A1 bekannt. Das Gehäuse weist in einem den Wärmetauscher aufnehmenden Aufnahmebereich zwei sich gegenüberliegende Kanalwände auf, die sich parallel zur Längsrichtung des Wärmetauschers durch den Ladeluftkanal erstrecken. Bei der bekannten Ladeluftkühleinrichtung sind an den Kanalwänden Dichtlippen integral ausgeformt, die bei eingesetztem Wärmetauscher elastisch verformt sind und vorgespannt an einer Längsseite des Wärmetauschers anliegen.

Ladeluftkühleinrichtungen werden dazu benötigt, bei einer aufgeladenen Brennkraftmaschine die durch die Aufladung erhitzte Frischluft abzukühlen, bevor sie Brennräumen der Brennkraftmaschine zugeführt wird. Hierdurch lässt sich der Massenstrom der Ladeluft erhöhen, während gleichzeitig die Verbrennungstemperaturen und somit die Emissionen reduziert werden können.

Üblicherweise umfasst eine Ladeluftkühleinrichtung ein Gehäuse, das einen Ladeluftkanal enthält und so in die Frischluftanlage der Brennkraftmaschine eingebunden werden kann, dass die Frischluftströmung der Frischluftanlage durch den Frischluftkanal des Gehäuses strömt. Ferner umfasst eine Ladeluftkühleinrichtung regelmäßig einen Wärmetauscher, der einen internen Kühlmittelpfad und einen externen Ladeluftpfad aufweist. Der Wärmetauscher wird dabei im Gehäuse so angeordnet, dass der externe Ladeluftpfad des Wärmetauschers in den Ladeluftkanal eingebunden wird, so dass die im Ladeluftkanal geführte Ladeluftströmung zwangsläufig durch den Ladeluftpfad des Wärmetauschers geführt ist.

Im internen Kühlmittelpfad zirkuliert ein Kühlmittel. Der Wärmetauscher kann beispielsweise an einen Kühlkreis der Brennkraftmaschine angeschlossen sein, so dass das Kühlmittel des Kühlkreises der Brennkraftmaschine auch durch den Kühlmittelpfad des Wärmetauschers strömt. Ebenso kann der Wärmetauscher auch an einen separaten Kühlkreis angeschlossen werden. Auf diese Weise kann der Ladeluft Wärme entzogen werden.

Um den Wärmetauscher im Gehäuse unterbringen zu können, gibt es unterschiedliche Ansätze. Beispielsweise kann das Gehäuse aus mehreren, beispielsweise aus zwei Gehäuseschalen bestehen, so dass der Wärmetauscher in die erste Gehäuseschale eingesetzt werden kann, bevor die zweite Gehäuseschale fest mit der ersten Gehäuseschale verbunden wird, um das Gehäuse zu schließen. Alternativ ist es ebenso möglich, das Gehäuse mit einer Montageöffnung zu versehen, durch die der Wärmetauscher in einer Längsrichtung des Wärmetauschers in das Gehäuse eingeschoben werden kann. Im eingeschobenen Zustand führt dann der Ladeluftkanal durch den Ladeluftpfad hindurch.

Unabhängig von der jeweiligen Montageart oder Herstellungsart besteht das Problem, den Wärmetauscher im Gehäuse so anzuordnen, dass für den Ladeluftstrom möglichst wenig Leckagen entstehen, durch welche der Ladeluftstrom den Wärmetauscher bzw. den Ladeluftpfad umgehen kann. Derartige Leckagen sind beispielsweise im Bereich eines beim Einschieben des Wärmetauschers vorangehenden Längsendes des Wärmetauschers, also an einem hinteren Boden des Wärmetauschers möglich. Um eine derartige Leckage zu vermeiden, sind grundsätzlich Abdichtungsmaßnahmen möglich, die beispielsweise mit separaten Dichtungselementen arbeiten und dementsprechend vergleichsweise aufwändig in der Herstellung sind.

Die vorliegende Erfindung beschäftigt sich mit dem Problem, für eine Ladeluftkühleinrichtung der eingangs genannten Art eine verbesserte Ausführungsform anzugeben, die sich insbesondere durch eine preiswerte Herstellbarkeit auszeichnet. Ferner soll außerdem eine hinreichende Abdichtung zur Vermeidung von Leckagen bezüglich des Ladeluftstroms erzielbar sein.

Dieses Problem wird bei der vorliegenden Erfindung insbesondere durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, das Gehäuse in einem Aufnahmebereich, der beim Einschieben des Wärmetauschers den Wärmetauscher aufnimmt, mit wenigstens einer elastischen Wand auszustatten, die durch das Einschieben des Wärmetauschers in den Aufnahmebereich von einem entspannten Zustand, der bei nicht in den Aufnahmebereich eingeschobenem Wärmetauscher vorliegt, in einen gespannten Zustand überführt wird, der bei in den Aufnahmebereich eingeschobenem Wärmetauscher vorliegt. Zweckmäßig sind das Gehäuse im Aufnahmebereich und der Wärmetauscher so aufeinander abgestimmt, dass ein von der Wand begrenzter Innenquerschnitt des Aufnahmebereichs im gespannten Zustand gegenüber dem entspannten Zustand elastisch aufgeweitet ist und vorgespannt direkt an einem Außenquerschnitt des Wärmetauschers anliegt. Durch die vorgespannte Anlage vereinfacht sich die Realisierung einer hinreichenden Abdichtung zwischen Gehäuse und Wärmetauscher. Bevorzugt ist dabei eine Ausführungsform, bei der im Bereich der Kontaktierung zwischen Wand und Wärmetauscher grundsätzlich auf eine als separates Bauteil konzipierte Dichtung verzichtet werden kann.

Der Werkstoff des Gehäuses, vorzugsweise ein Kunststoff, kann zumindest im Bereich der elastischen Wand so gewählt sein, dass er sich in besonderer Weise zur Realisierung einer hinreichenden Abdichtung durch direkten Kontakt mit dem Wärmetauscher eignet, der üblicherweise aus einem Metallwerkstoff besteht. Auch ist insbesondere denkbar, das Gehäuse zumindest im Bereich der jeweiligen elastischen Wand an der dem Ladeluftkanal zugewandten Innenseite mit einem Dichtungsmaterial, z.B. mit einem gummiartigen Elastomer-Kunststoff, zu beschichten bzw. auszuführen, z.B. mittels 2K-Technik.

Erfindungsgemäß ist nun eine solche elastische Wand durch eine Nischenwand gebildet, die eine Nische im Aufnahmebereich seitlich einfasst.

Die Erfindung beruht hierbei auf dem speziellen Gedanken, das Gehäuse gegenüber der Montageöffnung mit einer Nische auszustatten, die von einer Nischenwand seitlich eingefasst ist und die im Gehäuse so angeordnet und an den Wärmetauscher so angepasst ist, dass der Wärmetauscher beim Einschieben mit seinem hinteren Boden in die Nische eingeführt werden kann. Im montierten Zustand nimmt der Wärmetauscher einen eingeschobenen Zustand ein, bei dem der hintere Boden des Wärmetauschers in die Nische des Gehäuses eingreift. Durch die Unterbringung des hinteren Bodens in besagter Nische wird eine Leckage im Bereich des hinteren Bodens signifikant reduziert. Ferner lassen sich zwischen dem hinteren Boden und der Nische vergleichsweise einfache Dichtungsmaßnahmen realisieren. Beispielsweise kann eine umlaufende Dichtung vorgesehen sein, die den hinteren Boden gegenüber der Nischenwand abdichtet. Bevorzugt ist jedoch eine Ausführungsform, bei der im Bereich des hinteren Bodens grundsätzlich auf eine als separates Bauteil konzipierte Dichtung verzichtet werden kann.

Erfindungsgemäß ist die Nischenwand elastisch gestaltet, derart, dass sie durch das Einschieben des hinteren Bodens in die Nische von einem entspannten Zustand, der bei nicht in die Nische eingeschobenem hinteren Boden vorliegt, in einen gespannten Zustand überführt wird, der bei in die Nische eingeschobenem hinteren Boden vorliegt. Im gespannten Zustand ist nun ein von der Nischenwand umschlossener Innenquerschnitt der Nische gegenüber dem entspannten Zustand elastisch aufgeweitet, also vergrößert, so dass er im gespannten Zustand vorgespannt direkt an einem Außenquerschnitt des hinteren Bodens anliegt. Diese vorgespannte, direkte Kontaktierung zwischen dem hinteren Boden und der Nischenwand führt zu einer signifikanten Dichtungswirkung, so dass grundsätzlich auf eine separate Dichtung in diesem Bereich verzichtet werden kann.

Entsprechend einer vorteilhaften Ausführungsform kann eine andere derartige elastische Wand des Gehäuses im Aufnahmebereich durch eine sich parallel zur Längsrichtung des Wärmetauschers, vorzugsweise quer, durch den Ladeluftkanal erstreckende Kanalwand gebildet sein, die im gespannten Zustand an einer, vorzugsweise ebenen, Längsseite des Wärmetauschers anliegt. Somit kann insbesondere auf eine separate Dichtung im Bereich der jeweiligen Seitenwand verzichtet werden.

Bevorzugt sind dabei Ausführungsformen, bei denen die jeweilige Kanalwand im entspannten Zustand zum Ladeluftkanal konvex gewölbt ist und/oder bei denen zwei Kanalwände vorgesehen sind, die einander am Ladeluftkanal gegenüberliegen und die im gespannten Zustand an zwei voneinander abgewandten Längsseiten des Wärmetauschers anliegen.

Gemäß einer vorteilhaften Weiterbildung kann nun der hintere Boden im eingeschobenen Zustand spielfrei in die Nische eingreifen. Das fehlende Spiel radial zur Längsrichtung des Wärmetauschers führt zu einer verbesserten Dichtungswirkung. Zusätzlich oder alternativ kann der hintere Boden im eingeschobenen Zustand ohne zusätzliche bzw. ohne separate Dichtung in die Nische eingreifen. Somit kann auf ein Bauteil, nämlich auf eine separate Dichtung im Bereich des hinteren Bodens verzichtet werden, wodurch die hier vorgestellte Lösung besonders preiswert realisierbar ist.

Bei einer anderen vorteilhaften Ausführungsform kann die Nischenwand geschlossen umlaufend am Außenquerschnitt des hinteren Bodens anliegen. Hierdurch lässt sich die Gefahr einer Leckage im Bereich des hinteren Bodens zusätzlich reduzieren. Bevorzugt kommt die Nischenwand dabei am Außenquerschnitt des hinteren Bodens flächig zur Anlage, wodurch die Dichtungswirkung, insbesondere im Sinne einer Spaltdichtung, zusätzlich verbessert wird.

Entsprechend einer anderen vorteilhaften Ausführungsform kann der hintere Boden einen im wesentlichen rechteckigen Außenquerschnitt aufweisen. Ein im Wesentlichen rechteckiger Außenquerschnitt charakterisiert sich durch vier geradlinige Seiten, die über vier Ecken miteinander verbunden sind, wobei die Ecken auch abgerundet sein können, beispielsweise aus Fertigungsgründen. Sofern der hintere Boden einen solchen rechteckigen Außenquerschnitt besitzt, weist die Nischenwand zweckmäßig vier Längsabschnitte auf, die über vier Eckbereiche miteinander verbunden sind. Die Längsabschnitte der Nischenwand können im entspannten Zustand zum Innenquerschnitt hin konvex gewölbt oder aber geradlinig sein. Im gespannten Zustand sind die Längsabschnitte der Nischenwand im Wesentlichen geradlinig oder aber mit einer im Vergleich zum entspannten Zustand kleineren Wölbung zum Innenquerschnitt hin konvex gewölbt. Durch die Elastizität der Nischenwand kann diese beim Überführen vom entspannten Zustand in den gespannten Zustand elastisch verformt, insbesondere in der Umfangsrichtung gespannt, werden, wobei die im entspannten Zustand nach innen gewölbten oder geraden Längsabschnitte der Nischenwand wie Federelemente wirken, die beim Überführen in den gespannten Zustand gespannt werden. Durch die Vorspannung kann die Kontaktierung zwischen Nischenwand und hinterem Boden auch bei größeren Druckdifferenzen zwischen einer Anströmseite des Wärmetauschers und einer Abströmseite des Wärmetauschers gewährleistet werden.

Gemäß einer anderen vorteilhaften Ausführungsform kann der Wärmetauscher gegenüber dem hinteren Boden an seinem anderen Längsende einen vorderen Boden aufweisen, der einen Kühlmitteleinlass und einen Kühlmittelauslass umfasst. Kühlmitteleinlass und Kühlmittelauslass sind dabei mit dem internen Kühlmittelpfad fluidisch verbunden. Die Positionierung der Kühlmittelanschlüsse am vorderen Boden vereinfacht die abgedichtete Unterbringung des hinteren Bodens in der Nische.

Gemäß einer besonders vorteilhaften Weiterbildung kann der vordere Boden so ausgestaltet sein, dass er im montierten Zustand die Montageöffnung des Gehäuses verschließt. Mit anderen Worten, im montierten Zustand bildet der Boden einen Bestandteil des Gehäuses, so dass ein Bereich der Außenhaut des Gehäuses durch die Außenseite des vorderen Bodens gebildet ist. Hierbei kann auf einen separaten Deckel zum Verschließen der Montageöffnung verzichtet werden.

Alternativ ist dagegen auch eine Ausführungsform denkbar, bei der zum Verschließen der Montageöffnung ein separater Deckel vorgesehen ist, der Kühlmittelanschlüsse aufweist, die beim montiertem Deckel mit dem Kühlmitteleinlass und mit dem Kühlmittelauslass fluidisch verbunden sind.

Bei einer anderen vorteilhaften Weiterbildung kann vorgesehen sein, dass der Kühlmitteleinlass und der Kühlmittelauslass dazu adaptiert sind, mit einem Kühlkreis der Brennkraftmaschine fluidisch verbunden zu werden. Somit lässt sich der Wärmetauscher besonders einfach in einen bestehenden Kühlkreis des Fahrzeugs einbinden.

Bei einer anderen vorteilhaften Ausführungsform kann der Wärmetauscher zwischen seinen Längsenden an einer im Ladeluftkanal anströmseitig angeordneten Anströmseite einen Kühlerlufteinlass und an einer im Ladeluftkanal abströmseitig angeordneten, der Anströmseite gegenüberliegenden Abströmseite einen Kühlerluftauslass aufweisen. Ferner kann der Wärmetauscher zwischen seinen Längsenden sowie zwischen der Anströmseite und der Abströmseite eine Oberseite und dieser gegenüberliegend eine Unterseite aufweisen. Um nun auch Leckagen des Ladeluftstroms im Bereich der Oberseite bzw. im Bereich der Unterseite zu reduzieren, kann nun die Oberseite mittels eines oberen Dichtelements gegenüber dem Gehäuse abgedichtet sein, wobei zusätzlich oder alternativ die Unterseite mittels eines unteren Dichtelements gegenüber dem Gehäuse abgedichtet sein kann. Ein derartiges Dichtelement erstreckt sich zweckmäßig über die gesamte Länge des Wärmetauschers, also in der Längsrichtung des Wärmetauschers entlang der gesamten Oberseite bzw. entlang der gesamten Unterseite, vorzugsweise vom vorderen Boden bis zum hinteren Boden.

Besonders zweckmäßig ist dabei eine Ausführungsform, bei der das obere Dichtelement an der Oberseite des Wärmetauschers befestigt ist bzw. bei der das untere Dichtelement an der Unterseite des Wärmetauschers befestigt ist. Somit ist das jeweilige Dichtelement ein Bestandteil des Wärmetauschers, was die Montage des jeweiligen Dichtelements begünstigt.

Bei einer weiteren vorteilhaften Weiterbildung kann das obere Dichtelement mit einem oberen Bereich des Gehäuses eine Längsführung für den Wärmetauscher bilden. Zusätzlich oder alternativ kann das untere Dichtelement mit einem unteren Bereich des Gehäuses eine Längsführung für den Wärmetauscher bilden. Die Realisierung einer Längsführung mit Hilfe der jeweiligen Dichtung und eines zugehörigen Gehäusebereichs vereinfacht die Montage des Wärmetauschers, da durch die Längsführung der Wärmetauscher besonders einfach so in das Gehäuse eingeschoben werden kann, dass sein hinterer Boden die Nische findet.

Besonders zweckmäßig ist dabei eine Weiterbildung, bei welcher das obere Dichtelement eine nach oben offene Längsnut aufweist, in die der obere Bereich des Gehäuses eingreift, der hierzu als oberer Steg ausgestaltet ist. Zusätzlich oder alternativ kann das untere Dichtelement eine nach unten offene Längsnut aufweisen, in die der untere Bereich des Gehäuses eingreift, der hierzu als unterer Steg ausgestaltet ist. Die jeweilige Längsführung ist dabei als Nut-Feder-Führung konzipiert, die auch als Schubladenführung bezeichnet werden kann und sich durch eine besonders einfache Realisierbarkeit und effiziente Längsführung des Wärmetauschers auszeichnet.

Gemäß einer anderen vorteilhaften Ausführungsform kann der Wärmetauscher als Flachrohrwärmetauscher ausgestaltet sein, bei dem mehrere erste Flachrohre parallel zueinander von einem Einlasskanal zu einem Umlenkkanal führen und bei dem mehrere zweite Flachrohre parallel zueinander vom Umlenkkanal zu einem Auslasskanal führen. Vorteilhaft ist nun der Umlenkkanal im hinteren Boden ausgebildet, während der Einlasskanal und der Auslasskanal im vorderen Boden ausgebildet sind. Durch diese Bauform benötigt der Wärmetauscher im Bereich des hinteren Bodens keine Dichtungsmaßnahmen, um den Umlenkkanal gegenüber dem Ladeluftpfad abzudichten. Ferner lassen sich der Kühlmitteleinlass und der Kühlmittelauslass somit einfach am gleichen Boden, nämlich am vorderen Boden anordnen, was ebenfalls Dichtungsmaßnahmen vereinfacht.

Besonders vorteilhaft ist nun eine Ausführungsform, bei welcher der Wärmetauscher metallisch ist, während das Gehäuse aus Kunststoff hergestellt ist. Ein metallischer Wärmetauscher zeichnet sich durch eine besonders hohe Wärmeübertragungsleistung aus, während er gleichzeitig vergleichsweise kompakt gebaut werden kann. Ein Kunststoffgehäuse lässt sich dagegen besonders preiswert herstellen. Insbesondere ermöglicht die Realisierung des Gehäuses mit Kunststoff die Ausgestaltung mit elastischer Nischenwand. Die Elastizität des Kunststoffs ermöglicht außerdem eine Adaption des Gehäuses an thermisch bedingt sich ändernde Abmessungen des Wärmetauschers, die sein können.

Vorteilhaft ist eine Ausführungsform, bei welcher das Gehäuse mehrere separate Ladeluftrohre aufweist, in die der Ladeluftkanal übergeht und die einzelnen Zylindern der Brennkraftmaschine zugeordnet sind. In diesem Fall bildet das Gehäuse der Ladeluftkühleinrichtung das abströmseitige Ende der Frischluftanlage und dient zum Anschließen der Frischluftanlage an die Lufteinlassseite der Brennkraftmaschine.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Schnittansicht einer Ladeluftkühleinrichtung bei einer Schnittebene parallel zu einer Längsrichtung eines Wärmetauschers der Ladelufteinrichtung,
- Fig. 2: eine Schnittansicht der Ladeluftkühleinrichtung quer zur Längsrichtung des Wärmetauschers, bei fehlendem Wärmetauscher,
- Fig. 3: eine Schnittansicht wie in Fig. 2, jedoch bei eingesetztem Wärmetauscher,
- Fig. 4: eine Schnittansicht wie in Fig. 3, jedoch bei einer bezüglich der Längsrichtung des Wärmetauschers axial versetzten Schnittebene.

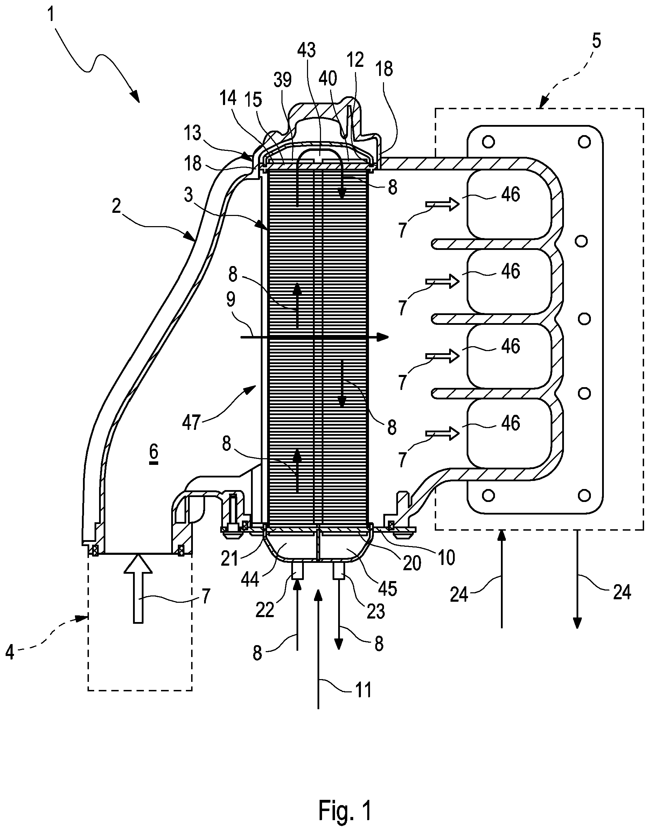

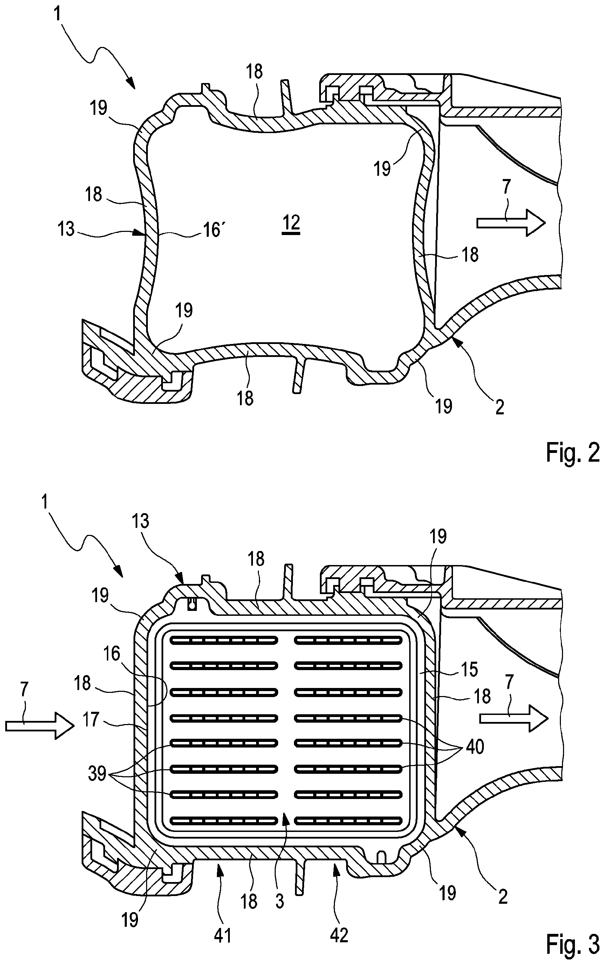

Entsprechend den Figuren 1-4 umfasst eine Ladeluftkühleinrichtung 1 ein Gehäuse 2 und einen Wärmetauscher 3. Der Wärmetauscher 3 ist in das Gehäuse 2 eingesetzt. Die Figuren 1, 3 und 4 zeigen einen montierten Zustand, bei dem der Wärmetauscher 3 in das Gehäuse 2 eingesetzt ist. Im Unterschied dazu zeigt Fig. 2 einen nicht montierten Zustand, bei dem der Wärmetauscher 3 fehlt, also nicht in das Gehäuse 2 eingesetzt ist.

Die Kühleinrichtung 1 ist für eine Verwendung in einer in Fig. 1 mit unterbrochener Linie angedeuteten Frischluftanlage 4 vorgesehen, mit deren Hilfe einer in Fig. 1 ebenfalls mit unterbrochene Linie angedeuteten Brennkraftmaschine 5 Frischluft zugeführt werden kann. Die Brennkraftmaschine 5 ist aufgeladen und ist bevorzugt in einem Kraftfahrzeug angeordnet und dient dort zum Antreiben des Fahrzeugs. Das Gehäuse 2 enthält einen Ladeluftkanal 6. Bei in die Frischluftanlage 4 eingebautem Gehäuse 2 führt der Ladeluftkanal 6 die in der Frischluftanlage 4 transportierte Ladeluftströmung, die in Fig. 1 durch einen Pfeil 7 angedeutet ist. Die Ladeluft ist dabei mit Hilfe einer hier nicht gezeigten Ladeeinrichtung, insbesondere ein Verdichter eines Abgasturboladers, aufgeladen, wodurch sich ihr Druck und ihre Temperatur erhöht hat. Die Ladeluftkühleinrichtung 1 dient nun zum Abkühlen der aufgeladenen Luft. Hierzu weist der Wärmetauscher 3 einen internen, in Fig. 1 durch Pfeile angedeuteten Kühlmittelpfad 8 auf sowie einen ebenfalls durch einen Pfeil angedeuteten externen Ladeluftpfad 9, die miteinander mediengetrennt, jedoch wärmeübertragend in Verbindung stehen.

Das Gehäuse 2 besitzt eine Montageöffnung 10, durch die der Wärmetauscher 3 in seiner Längsrichtung 11 in das Gehäuse 2 einschiebbar ist. Im eingeschobenen Zustand, der in den Figuren 1, 3 und 4 dargestellt ist, befindet sich der Wärmetauscher 3 so im Gehäuse 2, dass der Ladeluftkanal 6 des Gehäuses 2 durch den Ladeluftpfad 9 des Wärmetauschers 3 hindurchführt. Zur Aufnahme des Wärmetauschers 3 besitzt das Gehäuse 2 einen Aufnahmebereich 47, der sich im Wesentlichen quer durch den Ladeluftkanal 6 erstreckt.

Das Gehäuse 2 besitzt nun in diesem Aufnahmebereich 47 gegenüber der Montageöffnung 10, an einer dem Ladeluftkanal 6 zugewandten Innenseite eine Nische 12, die gemäß den Figuren 2 und 3 von einer Nischenwand 13 seitlich eingefasst ist. Gemäß den Figuren 1 und 3 besitzt der Wärmetauscher 3 an seinem beim Einschieben vorausgehenden Längsende 14 einen hinteren Boden 15, der im eingeschobenen Zustand des Wärmetauschers 3 in besagte Nische 12 eingreift. Die Nischenwand 13 ist nun elastisch gestaltet, derart, dass sie durch das Einschieben des hinteren Bodens 15 von einem in Fig. 2 dargestellten entspannten Zustand, der bei fehlendem Wärmetauscher 3 bzw. bei nicht in die Nische 12 eingeschobenen hinteren Boden 15 vorliegt, in einen gespannten Zustand überführt werden kann, der in Fig. 3 erkennbar ist. Der gespannte Zustand liegt dann bei in die Nische 12 eingeführtem hinteren Boden 15 vor. Die Nischenwand 13 umschließt einen Innenquerschnitt 16 bzw. 16' der Nische 12, wobei der Innenquerschnitt 16 im gespannten Zustand gemäß Fig. 3 aufgeweitet ist gegenüber dem Innenquerschnitt 16' im entspannten Zustand gemäß Fig. 2. Im gespannten Zustand liegt der Innenquerschnitt 16 direkt an einem Außenquerschnitt 17 des hinteren Bodens 15 vorgespannt an. Die Elastizität der Nischenwand 13 sowie deren Abmessungen sind so gewählt, dass der hintere Boden 15 im eingeschobenen Zustand spielfrei in die Nische 12 eingreift. Die Nischenwand 13 kommt gemäß Fig. 3 geschlossen umlaufend am Außenquerschnitt 17 des hinteren Bodens 15 zur Anlage, wobei außerdem in der Umfangsrichtung jeweils eine flächige Anlage bevorzugt ist. Insoweit kann hier eine dichte Kontaktierung zwischen Nischenwand 13 und hinterem Boden 15 realisiert werden, so dass die Kühleinrichtung 1 ohne eine zusätzliche separate Dichtung im Bereich des hinteren Bodens 15 gegenüber der Nischenwand 13 auskommt. Die Elastizität der Nischenwand 13 ermöglicht beim Überführen in den gespannten Zustand eine elastische Deformation, insbesondere in Verbindung mit einer elastischen Dehnung der Nischenwand 13 in deren Umfangsrichtung.

Bei der hier gezeigten Ausführungsform besitzt der hintere Boden 15 einen im Wesentlichen rechteckigen Außenquerschnitt. Die Nischenwand 13 weist vier Längsabschnitte 18 und vier Eckbereiche 19 auf. Je zwei in der Umfangsrichtung benachbarte Längsabschnitte 18 sind über einen Eckbereich 19 miteinander verbunden. Im entspannten Zustand gemäß Fig. 2 sind die Längsabschnitte 18 zum Innenquerschnitt 16' bzw. zum Inneren der Nische 12 hin konvex gewölbt. Im gespannten Zustand gemäß Fig. 3 sind die Längsabschnitte 18 dagegen geradlinig. Alternativ ist grundsätzlich auch eine Ausführungsform denkbar, bei welcher die Längsabschnitte 18 auch im gespannten Zustand gemäß Fig. 3 zum Innenquerschnitt 16 bzw. zum Inneren der Nische 12 hin konvex gewölbt sind, allerdings mit einer kleineren Wölbung, also mit einem größeren Wölbungsradius als im entspannten Zustand gemäß Fig. 2. Bei einer anderen Ausführungsform kann vorgesehen sein, dass die Längsabschnitte 18 (auch) im entspannten Zustand im Wesentlichen geradlinig sind. Zweckmäßig führt das Überführen in den gespannten Zustand dann hauptsächlich zu einer Dehnung und Spannung der Längsabschnitte 18 in deren Längsrichtung.

Entsprechend Fig. 1 besitzt der Wärmetauscher 3 gegenüber seinem hinteren Boden 15 an seinem anderen Längsende 20 einen vorderen Boden 21. Der vordere Boden 21 weist einen Kühlmitteleinlass 22 sowie einen Kühlmittelauslass 23 auf, die mit dem internen Kühlmittelpfad 8 fluidisch verbunden sind. Im gezeigten Beispiel verschließt der vordere Boden 21 die Montageöffnung 10, so dass der vordere Boden 21 einen Bestandteil der Außenseite des Gehäuses 2 bildet. Die Kühlmittelanschlüsse des Wärmetauschers 3, also der Kühlmitteleinlass 22 und der Kühlmittelauslass 23 sind dabei so adaptiert, dass sie mit einem durch Pfeile angedeuteten Kühlkreis 24 der Brennkraftmaschine 5 fluidisch verbunden werden können. Mit anderen Worten, der Wärmetauscher 3 der Ladeluftkühleinrichtung 1 kann in den Kühlkreis 24 der Brennkraftmaschine 5 eingebunden werden.

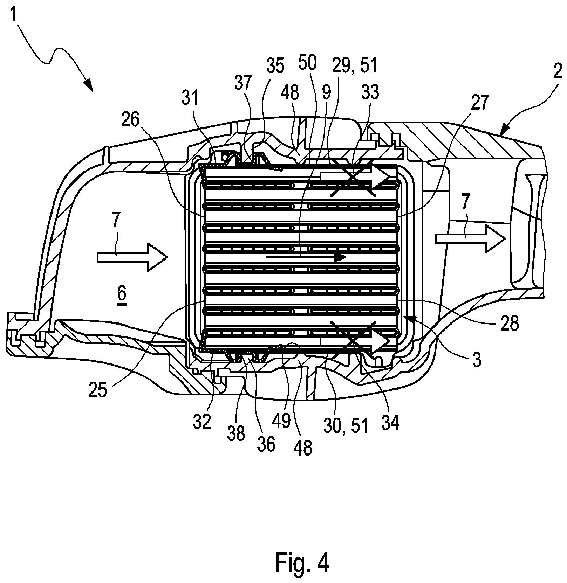

Entsprechend Fig. 4 besitzt der Wärmetauscher 3 zwischen seinen Längsenden 14, 20 an einer im Ladeluftkanal 6 anströmseitig angeordneten Anströmseite 25 einen Kühlerlufteinlass 26 und an einer im Ladeluftkanal 6 abströmseitig angeordneten Abströmseite 27 einen Kühlerluftauslass 28. Die Anströmseite 25 und Abströmseite 27 liegen sich dabei gegenüber, ebenso Kühlerlufteinlass 26 und Kühlerluftauslass 28. Der Wärmetauscher 3 weist außerdem zwischen seinen Längsenden 14, 20 und in der Umfangsrichtung zwischen der Anströmseite 25 und der Abströmseite 27 eine Oberseite 29 und dieser gegenüberliegend eine Unterseite 30 auf. Im Beispiel der Fig. 4 ist die Oberseite 29 mittels eines oberen Dichtelements 31 gegenüber dem Gehäuse 2 abgedichtet, während die Unterseite 30 mittels eines unteren Dichtelements 32 gegenüber dem Gehäuse 2 abgedichtet ist. Das obere Dichtelement 31 ist dabei an der Oberseite 29, also am Wärmetauscher 3 befestigt. Auch ist hier das untere Dichtelement 32 an der Unterseite 30, also am Wärmetauscher 3 befestigt.

Das obere Dichtelement 31 verhindert eine in Fig. 4 durch einen durchgestrichenen Pfeil angedeutete obere Leckageströmung 33 der Ladeluftströmung 7, die den Wärmetauscher 3 an seiner Oberseite 29 zu umgehen sucht. Das untere Dichtelement 32 verhindert eine ebenfalls durch einen durchgestrichenen Pfeil angedeutete untere Leckageströmung 34 der Ladeluftströmung 7, die den Wärmetauscher 3 an dessen Unterseite 30 zu umgehen sucht.

Das obere Dichtelement 31 wirkt mit einem oberen Bereich 35 des Gehäuses 2 zur Ausbildung einer Längsführung für den Wärmetauscher 3 im Gehäuse 2 zusammen. Im Beispiel wirkt auch das untere Dichtelement 32 mit einem unteren Bereich 36 des Gehäuses 2 zur Ausbildung einer Längsführung für den Wärmetauscher 3 im Gehäuse 2 zusammen. Im Beispiel der Fig. 4 besitzt hierzu das obere Dichtelement 31 eine nach oben offene Längsnut 37, in die der obere Bereich 35 des Gehäuses 2 eingreift, der hierzu zu einem oberen Steg ausgestaltet ist. Analog dazu besitzt das untere Dichtelement 32 eine nach unten offene Längsnut 38, in die der untere Bereich 36 des Gehäuses 2 eingreift, der hierzu als unterer Steg ausgestaltet ist.

Zusätzlich oder alternativ zu den in Fig. 4 gezeigten Dichtelementen 31, 32 kann eine hinreichende oder zusätzliche Abdichtung zwischen dem Gehäuse 2 und dem Wärmetauscher 3 auch mithilfe wenigstens einer elastischen Kanalwand 48 realisiert werden, die im Aufnahmebereich 47 am Gehäuse 2 ausgebildet sein kann. Im Beispiel der Fig. 4 sind zwei derartige elastische Kanalwände 48 vorgesehen, die einander am Ladeluftkanal 6 gegenüberliegen. Analog zur vorstehend genannten Nischenwand 13 können diese Kanalwände 48 durch das Einschieben des Wärmetauschers 3 in den Aufnahmebereich 47 von einem entspannten Zustand, der bei nicht in den Aufnahmebereich 47 eingeschobenem Wärmetauscher 3 vorliegt, in einen gespannten Zustand überführt wird, der bei in den Aufnahmebereich 47 eingeschobenem Wärmetauscher 3 vorliegt. In dem in Fig. 4 gezeigten gespannten Zustand ist nun ein von den beiden Kanalwänden 48 begrenzter Innenquerschnitt 49 des Aufnahmebereichs 47 gegenüber dem entspannten Zustand elastisch aufgeweitet und liegt gemäß Fig. 4 vorgespannt direkt an einem Außenquerschnitt 50 des Wärmetauschers 3 an. Die beiden Kanalwände 48 liegen hier jeweils an einer Längsseite 51 am Außenquerschnitt 50 des Wärmetauschers 3 an. Die beiden Längsseiten 51 sind im Beispiel der Fig. 4 durch die Oberseite 29 und die Unterseite 30 gebildet.

Um die gewünschte dichte und zweckmäßig vorgespannte Kontaktierung zwischen Gehäuse 2 und Wärmetauscher 3 erzielen zu können, kann vorgesehen sein, dass die beiden Kanalwände 48 im entspannten Zustand zum Ladeluftkanal 6 konvex gewölbt sind und erst im gespannten Zustand eine an die jeweilige Längsseite 51 angepasste, insbesondere geradlinige, Form einnehmen.

Gemäß den Figuren 3 und 4 ist der Wärmetauscher 3 zweckmäßig als Flachrohrwärmetauscher ausgestaltet, der mehrere erste Flachrohre 39 und mehrere zweite Flachrohre 40 aufweist, die jeweils parallel zueinander verlaufen. Die ersten Flachrohre 39 sind quer zur Längsrichtung 11 des Wärmetauschers 3 aufeinander gestapelt und bilden einen ersten Flachrohrstapel 41. Im Beispiel ist der erste Flachrohrstapel 41 anströmseitig angeordnet. Die zweiten Flachrohre 40 sind analog zu den ersten Flachrohren 39 aufeinander gestapelt und bilden einen zweiten Flachrohrstapel 42, der im gezeigten Beispiel abströmseitig angeordnet ist. Bevorzugt ist jedoch eine andere Anordnung, bei der die ersten Flachrohre 39 abströmseitig angeordnet sind, während die zweiten Flachrohre 40 anströmseitig angeordnet sind. Gemäß Fig. 1 besitzt der Wärmetauscher 3 im hinteren Boden 15 einen Umlenkkanal 43 und in seinem vorderen Boden 21 einen Einlasskanal 44 sowie einen Auslasskanal 45. Die ersten Flachrohre 39 führen vom Einlasskanal 44 zum Umlenkkanal 43. Die zweiten Flachrohre 40 führen vom Umlenkkanal 43 zum Auslasskanal 45. Der Kühlmitteleinlass 22 ist mit dem Einlasskanal 44 fludisch verbunden. Der Kühlmittelauslass 22 ist mit dem Auslasskanal 45 fludisch verbunden. In der in Fig. 1 gezeigten Ausführungsform ist der Einlasskanal 44 im Ladeluftpfad 9 stromauf des Auslasskanals 45 angeordnet, was zu einer Verschaltung nach dem Gleichstromprinzip führt. In der nicht gezeigten, vorstehend bereits angedeuteten, bevorzugten Ausführungsform ist zur Realisierung des Gegenstromprinzips der Einlasskanal 44 abströmseitig im Ladeluftpfad 9 angeordnet, während der Auslasskanal 45 dann anströmseitig im Ladeluftpfad 9 angeordnet ist.

In den Flachrohren 39, 40 sind nicht näher bezeichnete Turbulatoren angeordnet, um die Wärmeübertragung zwischen dem jeweiligen Kühlfluid und den Flachrohren 39, 40 zu verbessern. Die Flachrohre 39, 40 sind in der jeweiligen Stapelrichtung zueinander beabstandet angeordnet, um quer zur Stapelrichtung und quer zur Längsrichtung der Flachrohre 39, 40 Zwischenräume zur Ausbildung des externen Ladeluftpfads 9 zu bilden. Zur Beabstandung der benachbarten Flachrohre 39, 40 können wiederum Turbulatoren vorgesehen sein, um die Wärmeübertragung zwischen der Ladeluft und den Flachrohren 39, 40 zu verbessern.

Gemäß Fig. 1 besitzt das Gehäuse 2 mehrere separate Ladeluftrohre 46, die einzelnen Zylindern der Brennkraftmaschine 5 zugeordnet sind. Der Ladeluftkanal 6 des Gehäuses 2 geht in die separaten Ladeluftrohre 46 über. Somit gelangt die mit Hilfe des Wärmetauschers 3 gekühlte Ladeluftströmung 7 über die Ladeluftrohre 46 zu den Brennräumen der Brennkraftmaschine 5.

Zweckmäßig ist der Wärmetauscher 3 metallisch hergestellt, umfasst also metallische Flachrohre 39, 40 und metallische Böden 15, 21. Im Unterschied dazu ist das Gehäuse 2 vorzugsweise aus Kunststoff hergestellt. Insbesondere handelt es sich um ein einteiliges oder mehrteiliges Spritzformteil.

## Patentansprüche

1. Ladeluftkühleinrichtung für eine Frischluftanlage (4) einer Brennkraftmaschine (5), insbesondere eines Kraftfahrzeugs,
- mit einem Gehäuse (2), das einen Ladeluftkanal (6) enthält,
- mit einem Wärmetauscher (3), der einen internen Kühlmittelpfad (8) und einen externen Ladeluftpfad (9) aufweist,
- wobei das Gehäuse (2) eine Montageöffnung (10) aufweist, durch die der Wärmetauscher (3) in einer Längsrichtung (11) des Wärmetauschers (3) in das Gehäuse (2) einschiebbar ist, derart, dass im eingeschobenen Zustand der Ladeluftkanal (6) durch den Ladeluftpfad (9) hindurchführt,
- wobei das Gehäuse (2) in einem den Wärmetauscher (3) aufnehmenden Aufnahmebereich (47) wenigstens eine Wand (13; 48) aufweist,
- wobei das Gehäuse (2) im Aufnahmebereich (47) gegenüber der Montageöffnung (10) eine Nische (12) aufweist,
- wobei der Wärmetauscher (3) an seinem beim Einschieben vorausgehenden Längsende (14) einen hinteren Boden (15) aufweist, der im eingeschobenen Zustand in die Nische (12) eingreift,
**dadurch gekennzeichnet,**
- **dass** eine solche Wand eine Nischenwand (13) ist, welche die Nische (12) seitlich einfasst,
- **dass** die Nischenwand (13) elastisch gestaltet ist und durch das Einschieben des hinteren Bodens (15) in die Nische (12) von einem entspannten Zustand, der bei nicht in die Nische (12) eingeschobenem hinteren Boden (15) vorliegt, in einen gespannten Zustand überführt wird, der bei in die Nische (12) eingeschobenem hinteren Boden (15) vorliegt,
- **dass** ein von der Nischenwand (13) umschlossener Innenquerschnitt (16) der Nische (12) im gespannten Zustand gegenüber dem entspannten Zustand elastisch aufgeweitet ist und vorgespannt direkt an einem Außenquerschnitt (17) des hinteren Bodens (15) anliegt.

2. Ladeluftkühleinrichtung nach Anspruch 1,
**dadurch gekennzeichnet,**
**dass** eine andere solche Wand eine sich parallel zur Längsrichtung (11) des Wärmetauschers (3) durch den Ladeluftkanal (6) erstreckende Kanalwand (48) ist, die im gespannten Zustand an einer Längsseite (51) des Wärmetauschers (3) anliegt.

3. Ladeluftkühleinrichtung nach Anspruch 2,
**dadurch gekennzeichnet,**
**dass** die jeweilige Kanalwand (48) im entspannten Zustand zum Ladeluftkanal (6) konvex gewölbt ist.

4. Ladeluftkühleinrichtung nach Anspruch 2 oder 3,
**dadurch gekennzeichnet,**
**dass** zwei Kanalwände (48) vorgesehen sind, die einander am Ladeluftkanal (6) gegenüberliegen und die im gespannten Zustand an zwei voneinander abgewandten Längsseiten (51) des Wärmetauschers (3) anliegen.

5. Ladeluftkühleinrichtung nach einem der Ansprüche 1 bis 4,
**dadurch gekennzeichnet,**
- **dass** der hintere Boden (15) im eingeschobenen Zustand spielfrei und/oder ohne zusätzliche und/oder separate Dichtung in die Nische (12) eingreift, und/oder
- **dass** die Nischenwand (13) geschlossen umlaufend am Außenquerschnitt (17) des hinteren Bodens (15) anliegt.

6. Ladeluftkühleinrichtung nach einem der Ansprüche 1 bis 5,
**dadurch gekennzeichnet,**
- **dass** der hintere Boden (15) einen im Wesentlichen rechteckigen Außenquerschnitt (17) aufweist,
- **dass** die Nischenwand (13) vier Längsabschnitte (18) aufweist, die über vier Eckbereiche (19) miteinander verbunden sind,
- **dass** die Längsabschnitte (18) im entspannten Zustand zum Innenquerschnitt (16) hin konvex gewölbt oder geradlinig sind,
- **dass** die Längsabschnitte (18) im gespannten Zustand im Wesentlichen geradlinig sind oder mit einer im Vergleich zum entspannten Zustand kleineren Wölbung zum Innenquerschnitt (16) hin konvex gewölbt sind.

7. Ladeluftkühleinrichtung nach einem der Ansprüche 1 bis 6,
**dadurch gekennzeichnet,**
**dass** der Wärmetauscher (3) gegenüber dem hinteren Boden (15) an seinem anderen Längsende (20) einen vorderen Boden (21) aufweist, der einen Kühlmitteleinlass (22) und einen Kühlmittelauslass (23) aufweist, die mit dem internen Kühlmittelpfad (8) fluidisch verbunden sind, wobei insbesondere vorgesehen sein kann, dass der vordere Boden (21) die Montageöffnung (10) verschließt oder dass zum Verschließen der Montageöffnung (10) ein separater Deckel vorgesehen ist, der Kühlmittelanschlüsse aufweist, die bei montiertem Deckel mit dem Kühlmitteleinlass (22) und mit dem Kühlmittelauslass (23) fluidisch verbunden sind.

8. Ladeluftkühleinrichtung nach Anspruch 7,
**dadurch gekennzeichnet,**
**dass** der Kühlmitteleinlass (22) und der Kühlmittelauslass (23) dazu adaptiert sind, mit einem Kühlkreis (24) der Brennkraftmaschine (5) oder mit einem separaten Kühlkreis fluidisch verbunden zu werden.

9. Ladeluftkühleinrichtung nach einem der Ansprüche 1 bis 8,
**dadurch gekennzeichnet,**
- **dass** der Wärmetauscher (3) zwischen seinen Längsenden (14, 20) an einer im Ladeluftkanal (6) anströmseitig angeordneten Anströmseite (25) einen Kühlerlufteinlass (26) und an einer im Ladeluftkanal (6) abströmseitig angeordneten, der Anströmseite (25) gegenüberliegenden Abströmseite (27) einen Kühlerluftauslass (28) aufweist,
- **dass** der Wärmetauscher (3) zwischen seinen Längsenden (14, 20) sowie zwischen der Anströmseite (25) und der Abströmseite (27) eine Oberseite (29) und dieser gegenüberliegend eine Unterseite (30) aufweist,
- **dass** die Oberseite (29) mittels eines oberen Dichtelements (31) und/oder die Unterseite (30) mittels eines unteren Dichtelements (32) gegenüber dem Gehäuse (2) abgedichtet ist.

10. Ladeluftkühleinrichtung nach Anspruch 9,
**dadurch gekennzeichnet,**
- **dass** das obere Dichtelement (31) an der Oberseite (29) des Wärmetauschers (3) befestigt ist, und/oder
- **dass** das untere Dichtelement (32) an der Unterseite (30) des Wärmetauschers (3) befestigt ist.

11. Ladeluftkühleinrichtung nach Anspruch 9 oder 10,
**dadurch gekennzeichnet,**
- **dass** das obere Dichtelement (31) mit einem oberen Bereich (35) des Gehäuses (2) eine Längsführung für den Wärmetauscher (3) bildet, und/oder
- **dass** das untere Dichtelement (32) mit einem unteren Bereich (36) des Gehäuses (2) eine Längsführung für den Wärmetauscher (3) bildet.

12. Ladeluftkühleinrichtung nach Anspruch 11,
**dadurch gekennzeichnet,**
- **dass** das obere Dichtelement (31) eine nach oben offene Längsnut (37) aufweist, in die der als oberer Steg ausgestaltete obere Bereich (35) des Gehäuses (2) eingreift, und/oder
- **dass** das untere Dichtelement (32) eine nach unten offene Längsnut (38) aufweist, in die der als unterer Steg ausgestaltete untere Bereich (36) des Gehäuses (2) eingreift.

13. Ladeluftkühleinrichtung nach einem der Ansprüche 1 bis 12,
**dadurch gekennzeichnet,**
- **dass** der Wärmetauscher (3) als Flachrohrwärmetauscher ausgestaltet ist,
- bei dem mehrere erste Flachrohre (39) parallel zueinander von einem Einlasskanal (44) zu einem Umlenkkanal (43) führen,
- bei dem mehrere zweite Flachrohre (40) parallel zueinander vom Umlenkkanal (43) zu einem Auslasskanal (45) führen,
- wobei der Umlenkkanal (43) im hinteren Boden (15) ausgebildet ist, während der Einlasskanal (44) und der Auslasskanal (45) im vorderen Boden (21) ausgebildet sind.

14. Ladeluftkühleinrichtung nach einem der Ansprüche 1 bis 13,
**dadurch gekennzeichnet,**
**dass** der Wärmetauscher (3) metallisch ist, während das Gehäuse (2) aus Kunststoff hergestellt ist.

15. Ladeluftkühleinrichtung nach einem der Ansprüche 1 bis 14,
**dadurch gekennzeichnet,**
**dass** das Gehäuse (2) mehrere separate Ladeluftrohre (46) aufweist, in die der Ladeluftkanal (6) übergeht und die einzelnen Zylindern der Brennkraftmaschine (5) zugeordnet sind.

## Claims

1. A charge-air cooling device for a fresh-air system (4) of an internal combustion engine (5), in particular of a motor vehicle,
- having a housing (2) which contains a charge-air duct (6),
- having a heat exchanger (3) which has an internal coolant path (8) and an external charge-air path (9),
- wherein the housing (2) has a mounting opening (10), through which the heat exchanger (3) can be pushed into the housing (2) in a longitudinal direction (11) of the heat exchanger (3), in such a way that, in the pushed-in state, the charge-air duct (6) leads through the charge-air path (9),
- wherein the housing (2) has at least one wall (13; 48) in a receiving region (47) which receives the heat exchanger (3),
- wherein the housing (2) in the receiving region (47) has a recess (12) opposite the mounting opening (10),
- wherein the heat exchanger (3) has, at its leading longitudinal end (14) on pushing-in, a rear base (15) which, in the pushed-in state, engages into the recess (12),
**characterized in**
- **that** the respective wall is a recess wall (13) which borders the recess (12) laterally,
- **that** the recess wall (13) is of elastic design and by the pushing in of the rear base (15) into the recess (12) is transferred from a relaxed state, which prevails if the rear base (15) has not been pushed into the recess (12), into a stressed state, which prevails if the rear base (15) has been pushed into the recess (12),
- **that** an inner cross section (16) of the recess (12), surrounded by the recess wall (13), in the stressed state is widened elastically in comparison with the relaxed state and bears in a prestressed manner directly against an outer cross section (17) of the rear base (15).

2. The charge-air cooling device according to Claim 1, **characterized in that** another such wall is a duct wall (48) extending parallel to the longitudinal direction (11) of the heat exchanger (3) through the charge-air duct (6), which duct wall in the stressed state bears against a longitudinal side (51) of the heat exchanger (3).

3. The charge-air cooling device according to Claim 2, **characterized in that** the respective duct wall (48) in the relaxed state is curved in a convex manner to the charge-air duct (6).

4. The charge-air cooling device according to Claim 2 or 3, **characterized in that** two duct walls (48) are provided, which lie opposite one another on the charge-air duct (6) and which in the stressed state bear against two longitudinal sides (51) of the heat exchanger (3) facing away from one another.

5. The charge-air cooling device according to any one of Claims 1 to 4,
**characterized in**
- **that** the rear base (15) in the pushed-in state engages in a manner free of play and/or without additional and/or separate sealing into the recess (12), and/or
- **that** the recess wall (13) lies in a closed circumferential manner against the outer cross section (17) of the rear base (15).

6. The charge-air cooling device according to one of Claims 1 to 5,
**characterized in**
- **that** the rear base (15) has a substantially rectangular outer cross section (17),
- **that** the recess wall (13) has four longitudinal sections (18), which are connected with one another via four corner regions (19),
- **that** the longitudinal sections (18) in the relaxed state are curved in a convex manner towards the inner cross section (16), or are rectilinear,
- **that** the longitudinal sections (18) in the stressed state are substantially rectilinear or are curved in a convex manner towards the inner cross section (16) with a smaller curvature in comparison with the relaxed state.

7. The charge-air cooling device according to one of Claims 1 to 6, **characterized in that** the heat exchanger (3) has, opposite the rear base (15) at its other longitudinal end (20), a front base (21) which has a coolant inlet (22) and a coolant outlet (23), which are fluidically connected with the internal coolant path (8), wherein provision can be made in particular that the front base (21) closes the mounting opening (10) or that for closing the mounting opening (10) a separate cover is provided, which has coolant connections which, when the cover is mounted, are fluidically connected with the coolant inlet (22) and with the coolant outlet (23).

8. The charge-air cooling device according to Claim 7, **characterized in that** the coolant inlet (22) and the coolant outlet (23) are adapted to be fluidically connected with a cooling circuit (24) of the internal combustion engine (5) or with a separate cooling circuit.

9. The charge-air cooling device according to one of Claims 1 to 8,
**characterized in**
- **that** the heat exchanger (3) has, between its longitudinal ends (14, 20) on an inflow side (25) arranged in the charge-air duct (6) on the inflow side, a cooler air inlet (26), and a cooler air outlet (28) on an outflow side (27) arranged in the charge-air duct (6) on the outflow side, lying opposite the inflow side (25),
- **that** the heat exchanger (3) has, between its longitudinal ends (14, 20) and between the inflow side (25) and the outflow side (27), an upper side (29) and an underside (30) lying opposite thereto,
- **that** the upper side (29) is sealed by means of an upper sealing element (31) and/or the underside (30) is sealed by means of a lower sealing element (32) with respect to the housing (2).

10. The charge-air cooling device according to Claim 9, **characterized in**
- **that** the upper sealing element (31) is fastened on the upper side (29) of the heat exchanger (3), and/or
- **that** the lower sealing element (32) is fastened on the underside (30) of the heat exchanger (3).

11. The charge-air cooling device according to Claim 9 or 10,
**characterized in**
- **that** the upper sealing element (31) forms with an upper region (35) of the housing (2) a longitudinal guide for the heat exchanger (3), and/or
- **that** the lower sealing element (32) forms with a lower region (36) of the housing (2) a longitudinal guide for the heat exchanger (3).

12. The charge-air cooling device according to Claim 11,
**characterized in**
- **that** the upper sealing element (31) has an upwardly open longitudinal groove (37), into which the upper region (35) of the housing (2), configured as an upper web, engages, and/or
- **that** the lower sealing element (32) has a downwardly open longitudinal groove (38), into which the lower region (36) of the housing (2), configured as a lower web, engages.

13. The charge-air cooling device according to one of Claims 1 to 12,
**characterized in**
- **that** the heat exchanger (3) is configured as a flat tube heat exchanger,
- in which several first flat tubes (39) lead parallel to one another from an inlet duct (44) to a deflection duct (43),
- in which several second flat tubes (40) lead parallel to one another from the deflection duct (43) to an outlet duct (45),
- wherein the deflection duct (43) is constructed in the rear base (15), whereas the inlet duct (44) and the outlet duct (45) are constructed in the front base (21).

14. The charge-air cooling device according to one of Claims 1 to 13, **characterized in that** the heat exchanger (3) is metallic, whereas the housing (2) is made from plastic.

15. The charge-air cooling device according to one of Claims 1 to 14, **characterized in that** the housing (2) has several separate charge-air tubes (46), into which the charge-air duct (6) passes, and which are associated with individual cylinders of the internal combustion engine (5).

## Revendications

1. Système de refroidissement d'air de suralimentation pour un système d'air frais (4) d'un moteur à combustion interne (5), en particulier d'un véhicule automobile,
- avec un carter (2), qui contient un canal d'air de suralimentation (6),
- avec un échangeur de chaleur (3), qui présente un chemin de liquide de refroidissement (8) interne et un chemin d'air de suralimentation (9) externe,
- dans lequel le carter (2) présente une ouverture de montage (10), par laquelle l'échangeur de chaleur (3) peut être glissé à l'intérieur du carter (2) dans une direction longitudinale (11) de l'échangeur de chaleur (3) de telle manière que dans l'état introduit par glissement, le canal d'air de suralimentation (6) est guidé au travers du chemin d'air de suralimentation (9),
- dans lequel le carter (2) présente au moins une paroi (13 ; 48) dans une zone de réception (47) recevant l'échangeur de chaleur (3),
- dans lequel le carter (2) présente, dans la zone de réception (47), par rapport à l'ouverture de montage (10), une niche (12),
- dans lequel l'échangeur de chaleur (3) présente, au niveau de son extrémité longitudinale (14) devançant lors de l'introduction par glissement, un fond arrière (15), qui vient en prise avec la niche (12) dans l'état introduit par glissement, **caractérisé en ce**
- **qu'**une paroi de ce type est une paroi de niche (13), qui encadre latéralement la niche (12),
- **que** la paroi de niche (13) est configurée de manière élastique et est amenée par l'introduction par glissement du fond arrière (15) dans la niche (12), depuis un état détendu, qui est présent lorsque le fond arrière (15) n'est pas introduit par glissement dans la niche (12), dans un état tendu, qui est présent lorsque le fond arrière (15) est introduit par glissement dans la niche (12),
- **qu'**une section transversale intérieure (16), entourée par la paroi de niche (13), de la niche (12) est élargie de manière élastique dans l'état tendu par rapport à l'état détendu et repose, sous l'effet d'une précontrainte, directement au niveau d'une section transversale extérieure (17) du fond arrière (15).

2. Système de refroidissement d'air de suralimentation selon la revendication 1,
**caractérisé en ce**
**qu'**une autre paroi de ce type est une paroi de canal (48) s'étendant de manière parallèle par rapport à la direction longitudinale (11) de l'échangeur de chaleur (3) à travers le canal d'air de suralimentation (6), laquelle repose, dans l'état tendu, au niveau d'un côté longitudinal (51) de l'échangeur de chaleur (3).

3. Système de refroidissement d'air de suralimentation selon la revendication 2,
**caractérisé en ce**
**que** la paroi de canal (48) respective est bombée de manière convexe par rapport au canal d'air de suralimentation (6) dans l'état détendu.

4. Système de refroidissement d'air de suralimentation selon la revendication 2 ou 3,
**caractérisé en ce**
**que** sont prévues deux parois de canal (48), qui se font face l'une l'autre au niveau du canal d'air de suralimentation (6) et qui reposent, dans l'état tendu, au niveau de deux côtés longitudinaux (51), opposés l'un à l'autre, de l'échangeur de chaleur (3).

5. Système de refroidissement d'air de suralimentation selon l'une quelconque des revendications 1 à 4,
**caractérisé en ce**
- **que** le fond arrière (15) vient en prise, dans l'état introduit par glissement, sans jeu et/ou sans joint d'étanchéité supplémentaire et/ou séparé, avec la niche (12), et/ou
- **que** la paroi de niche (13) repose en périphérie de manière fermée au niveau de la section transversale extérieure (17) du fond arrière (15).

6. Système de refroidissement d'air de suralimentation selon l'une quelconque des revendications 1 à 5,
**caractérisé en ce**
- **que** le fond arrière (15) présente une section transversale extérieure (17) sensiblement rectangulaire,
- **que** la paroi de niche (13) présente quatre sections longitudinales (18), qui sont reliées les unes aux autres par l'intermédiaire de quatre zones d'angle (19),
- **que** les sections longitudinales (18), dans l'état détendu, sont bombées de manière convexe en direction de la section transversale intérieure (16) ou sont rectilignes,
- **que** les sections longitudinales (18), dans l'état tendu, sont sensiblement rectilignes ou sont bombées de manière convexe en direction de la section transversale intérieure (16) avec un bombement plus petit en comparaison avec l'état détendu.

7. Système d'air de suralimentation selon l'une quelconque des revendications 1 à 6,
**caractérisé en ce**
**que** l'échangeur de chaleur (3) présente, par rapport au fond arrière (15), au niveau de son autre extrémité longitudinale (20), un fond avant (21), qui présente une entrée de liquide de refroidissement (22) et une sortie de liquide de refroidissement (23), qui sont reliées de manière fluidique au chemin de liquide de refroidissement (8) interne, dans lequel en particulier il peut être prévu que le fond avant (21) ferme l'ouverture de montage (10), ou en ce qu'un couvercle séparé est prévu afin de fermer l'ouverture de montage (10), lequel couvercle présente des raccords de liquide de refroidissement, qui sont reliés de manière fluidique à l'entrée de liquide de refroidissement (22) et à la sortie de liquide de refroidissement (23) lorsque le couvercle est monté.

8. Système d'air de suralimentation selon la revendication 7,
**caractérisé en ce**
**que** l'entrée de liquide de refroidissement (22) et la sortie de liquide de refroidissement (23) sont adaptées afin d'être reliées de manière fluidique à un circuit de refroidissement (24) du moteur à combustion interne (5) ou à un circuit de refroidissement séparé.

9. Système d'air de suralimentation selon l'une quelconque des revendications 1 à 8,
**caractérisé en ce**
- **que** l'échangeur de chaleur (3) présente, entre ses extrémités longitudinales (14, 20) au niveau d'un côté de flux entrant (25), disposé du côté du flux entrant dans le canal d'air de suralimentation (6), une entrée d'air de refroidisseur (26) et au niveau d'un côté de flux sortant (27), faisant face au côté de flux entrant (25), disposé du côté du flux sortant dans le canal d'air de suralimentation (6), une sortie de refroidisseur (28),
- **que** l'échangeur de chaleur (3) présente, entre ses extrémités longitudinales (14, 20) ainsi qu'entre le côté de flux entrant (25) et le côté de flux sortant (27), un côté supérieur (29) et un côté inférieur (30) faisant face à ce dernier,
- **que** le côté supérieur (29) est étanchéifié par rapport au carter au moyen d'un élément étanche supérieur (31) et/ou le côté inférieur (30) est étanchéifié par rapport au carter (2) au moyen d'un élément étanche inférieur (32).

10. Système d'air de suralimentation selon la revendication 9,
**caractérisé en ce**
- **que** l'élément étanche supérieur (31) est fixé au niveau du côté supérieur (29) de l'échangeur de chaleur (3), et/ou
- **que** l'élément étanche inférieur (32) est fixé au niveau du côté inférieur (30) de l'échangeur de chaleur (3).

11. Système d'air de suralimentation selon la revendication 9 ou 10,
**caractérisé en ce**
- **que** l'élément étanche supérieur (31) forme, avec une zone supérieure (35) du carter (2), un guidage longitudinal pour l'échangeur de chaleur (3), et/ou
- **que** l'élément étanche inférieur (32) forme, avec une zone inférieure (36) du carter (2), un guidage longitudinal pour l'échangeur de chaleur (3).

12. Système d'air de suralimentation selon la revendication 11,
**caractérisé en ce**
- **que** l'élément étanche supérieur (31) présente une rainure longitudinale (37) ouverte vers le haut, avec laquelle la zone supérieure (35), configurée sous la forme d'une nervure supérieure, du carter (2) vient en prise, et/ou
- **que** l'élément étanche inférieur (32) présente une rainure longitudinale (38) ouverte vers le bas, avec laquelle la zone inférieure (36), configurée sous la forme d'une nervure inférieure, du carter (2) vient en prise.

13. Système d'air de suralimentation selon l'une quelconque des revendications 1 à 12,
**caractérisé en ce**
- **que** l'échangeur de chaleur (3) est configuré sous la forme d'un échangeur de chaleur à tubes plats,
- où plusieurs premiers tubes plats (39) mènent, de manière parallèle les uns par rapport aux autres, d'un canal d'entrée (44) à un canal de déviation (43),
- où plusieurs deuxièmes tubes plats (40) mènent, de manière parallèle les uns par rapport aux autres, du canal de déviation (43) à un canal de sortie (45),
- dans lequel le canal de déviation (43) est réalisé dans le fond arrière (15), tandis que le canal d'entrée (44) et le canal de sortie (45) sont réalisés dans le fond avant (21).

14. Système d'air de suralimentation selon l'une quelconque des revendications 1 à 13,
**caractérisé en ce**
**que** l'échangeur de chaleur (3) est en métal, tandis que le carter (2) est fabriqué à partir de plastique.

15. Système d'air de suralimentation selon l'une quelconque des revendications 1 à 14,
**caractérisé en ce**
**que** le carter (2) présente plusieurs tubes d'air de suralimentation (46) séparés, dans lesquels le canal d'air de suralimentation (6) se confond, et les divers cylindres sont associés au moteur à combustion interne (5).
